# EUROPÄISCHE PATENTSCHRIFT

(11) **EP 2 839 236 B1**
(45) Veröffentlichungstag und Bekanntmachung des Hinweises auf die Patenterteilung: **30.03.2016**
(21) Anmeldenummer: 12718936.3
(22) Anmeldetag: 19.04.2012
(51) Int. Cl.: G01B 5/00, B23Q 3/00, B23Q 16/00, B23Q 3/10

(54) **ADAPTERPLATTE**
ADAPTER PLATE
PLAQUE ADAPTATRICE

(43) Veröffentlichungstag der Anmeldung: 25.02.2015
(73) Patentinhaber: Carl Zeiss Industrielle Messtechnik GmbH, 73447 Oberkochen (DE)
(72) Erfinder: ENDERLE, Eckhard, 73434 Aalen (DE); SAGEMUELLER, Rainer, 73434 Aalen (DE)
(74) Vertreter: Carl Zeiss AG - Patentabteilung
(86) Internationale Anmeldenummer: PCT/EP2012/057212
(87) Internationale Veröffentlichungsnummer: WO 2013/156074

(56) Entgegenhaltungen:
- EP-A2- 0 995 541
- US-A- 3 830 485
- US-A- 4 260 307
- US-A- 4 759 536

## Beschreibung

Die Erfindung betrifft ein Koordinatenmessgerät mit einem Messtisch, einem Drehtisch und einer Adapterplatte zur Montage des Drehtisches auf dem Messtisch.

Koordinatenmessgeräte, wie beispielsweise Portal- oder Horizontalarm-Koordinatenmessgeräte verfügen üblicherweise über einen Messtisch, der beispielsweise aus Granit oder aus Metall hergestellt ist, auf dem unterschiedliche Objekte angeordnet werden können. Wenngleich die Mehrzahl dieser Messtische horizontal ausgerichtet ist, ist die Ausrichtung dieser Messtische nicht hierauf beschränkt und kann im Wesentlichen beliebig sein. Beispielsweise sind auch Koordinatenmessgeräte mit vertikal ausgerichteten Messtischen bekannt. Regelmäßig wird beispielsweise ein zu vermessendes Werkstück hierauf angeordnet. Nachfolgend kann das Werkstück unter anderem optisch und/oder taktil abgetastet werden, um eine äußere Formgebung des Werkstücks zu erfassen und beispielsweise mit Sollwerten vergleichen zu können. Es können aber auch andere Objekte, wie beispielsweise Kalibriernormale, Magazine zur Aufnahme von unterschiedlichen Tastern oder auch die hier interessierenden Drehtische auf einem solchen Messtisch befestigt werden.

Zur Montage der Objekte kann der Messtisch mit einem vorgegebenen Lochraster ausgestattet sein, beispielsweise alle 200mm eine Gewindebuchse. Die Montage des Objektes über diese Gewindebuchsen kann auf unterschiedlichste Weise geschehen. Im einfachsten Fall kann das Objekt unmittelbar über Schrauben an den Gewindebuchsen befestigt werden. Allerdings ist dies wegen der vollkommen unterschiedlichen Formen der zu montierenden Objekte im Regelfall nicht möglich. Deshalb werden insbesondere zur Montage von Drehtischen zusätzlich Hilfsmittel eingesetzt, mit denen der Drehtisch auf dem Messtisch befestigt werden kann. Ein bekanntes Hilfsmittel ist eine Adapterplatte, wobei eine solche Adapterplatte auf der dem Messtisch abgewandten Befestigungsseite der Adapterplatte entsprechend der Formgebung des zu befestigenden Drehtisches Befestigungseinrichtungen wie beispielsweise Gewindebohrungen aufweist, um den Drehtisch auf der Befestigungsseite der Adapterplatte zu befestigen. Außerdem weist eine solche Adapterplatte ferner ein Lochraster auf, das dem Lochraster des Messtisches entspricht, so dass die Adapterplatte wiederum auf dem Messtisch befestig werden kann. Dieses Lochraster kann beispielsweise auch in Form von randseitigen Löchern ausgebildet sein, um die Adapterplatte mit Schrauben auf dem Messtisch festzuschrauben. Alternativ genügt jedoch auch ein umlaufender Rand, der nur durch Spannpratzen in Richtung des Messtisches gespannt wird.

Dabei ist es bevorzugt, dass der zu montierende Drehtisch, möglichst über drei Befestigungseinrichtungen auf der Adapterplatte befestigt ist. Sofern der Drehtisch mit genau drei relativ kleinen Auflageflächen auf der Adapterplatte aufliegt, und sich hierdurch ein Dreipunktlager ergibt, ist die Lage des Drehtisches eindeutig festgelegt. Natürlich sind aber auch mehr oder weniger als drei Befestigungseinrichtungen oder auch mehr oder weniger als drei Auflageflächen möglich. Dabei können sich jedoch beispielsweise aufgrund einer Formgebung des Drehtisches Drehmomente ergeben, die auf die Adapterplatte einwirken, auf der der Drehtisch befestigt ist. Solche Drehmomente werden üblicherweise als Kippmomente bezeichnet. Bei Messtischen, die nicht horizontal ausgerichtet sind, sondern beispielsweise vertikal, führt alleine die Schwerkraft des Drehtisches zu Kippmomenten. Außerdem können die Kippmomente auch durch eine asymmetrische Beladung einer drehbaren Platte des Drehtischs mit einem zu vermessenden Werkstück entstehen. Zudem führt eine Drehung eines asymmetrisch beladenen Drehtisches dazu, dass sich zusätzlich die Wirkrichtung der Kippmomente in Abhängigkeit von der Position der drehbaren Platte beziehungsweise des Rotors des Drehtisches zeitlich ändert. Aufgrund der endlichen Steifigkeit der Adapterplatte können über Befestigungspunkte des Drehtisches , insbesondere bei Beaufschlagung des Drehtischs mit einem Kippmoment, Zug- und Druckkräfte in die Adapterplatte eingeleitet werden, die zu einer Bewegung, Verformung oder Verkippung der Adapterplatte relativ zum Messtisch und damit zu einer Vergrößerung von Messungenauigkeiten des Koordinatenmessgeräts führen, sofern diese Bewegungen nicht in geeigneter Weise erfasst und berücksichtigt werden.

Das Gebrauchsmuster DE 296 22 891 U1 beschreibt eine Vorrichtung zur Zuführung und Fixierung von Paletten bei Koordinatenmessgeräten, wobei auf einer Befestigungsseite der Palette mittels einer Spannvorrichtung ein Werkstück angeordnet wird. Die Palette wiederum kann mit einer pneumatischen Spanneinheit auf einem Messtisch des Koordinatenmessgeräts fixiert werden.

Das Dokument EP 0 995 541 A2 zeigt eine Befestigungseinrichtung für eine zu verschweißende Flash-Speicher-Karte, wobei die Befestigungseinrichtung auf der Aufspannplatte einer Schweißmaschine angeordnet ist. Die Befestigungsvorrichtung weist eine Aufnahme mit einer Aussparung auf, in die die Karte eingelegt werden kann, sowie einen Kippmechanismus, über den die Aufnahme relativ zu einer rechteckigen Grundplatte gekippt werden kann. Die Grundplatte steht über vier in den Ecken befindliche Füße auf der Aufspannplatte.

Die Druckschrift US 4,759,536 zeigt eine Klemmvorrichtung für eine Werkzeugmaschine, mit der Paletten, auf denen zu bearbeitende Werkstücke befestigt sind, in einer vordefinierten Position geklemmt werden können. Die Klemmvorrichtung weist einen manuell betätigbaren Drehhebel auf, wobei durch die Betätigung des Drehhebels die Palette in eine geklemmte Position gezogen wird. Der Klemmmechanismus ist auf einer Aufspannplatte einer Werkzeugmaschine angeordnet.

Die Druckschrift US 3,830,485 zeigt einen Aufspanntisch für eine Werkzeugmaschine. Der Aufspanntisch weist zumindest eine Nut auf, in der eine Profilschiene mit einer T-Nut angeordnet ist, wobei diese Profilschiene in senkrecht zur Werkstückauflagefläche stehender Richtung beweglich durch die Nut geführt ist. In der T-Nut der Profilschiene sind T-Bolzen geführt, über die ein Werkstück am Aufspanntisch befestigt werden kann. Zum Spannen eines an den T-Bolzen befestigten Werkstückes ist ein Aktuator vorgesehen, mit dem die Profilschiene in senkrecht zur Werkstückauflagefläche stehender Richtung bewegt werden kann.

Die Druckschrift US 4,260,307 zeigt eine Befestigung für Werkstücke auf einer Bohrmaschine. Die Befestigung weist einen oberen Werkstückauflageteller auf, in dem radial verlaufende Nuten vorgesehen sind. Unter dem Werkstückauflageteller ist ferner ein unterer Teller mit radial verlaufenden T-Nuten angeordnet, die mit den Nuten im Werkstückauflageteller fluchten. Von den T-Nuten sind hierbei T-Bolzen geführt, die durch die Nuten im Werkstückauflageteller hindurchragen, wobei an diesen T-Bolzen ein zu bearbeitendes Werkstück befestigt werden kann. Zum Spannen eines an den T-Bolzen befestigten Werkstückes kann der untere Teller relativ zum Werkstückauflageteller über eine Aktuatorik abgesenkt werden.

Ausgehend von diesem Stand der Technik ist der Fachmann vor die Aufgabe gestellt, bei einem Koordinatenmessgerät der eingangs genannten Art mit einer Adapterplatte die Adapterplatte dahingehend zu verbessern, dass die Verformung der Adapterplatte verringert wird, die sich aufgrund von eingeleiteten Kippmomenten ergibt, insbesondere durch sich zeitlich und/oder räumlich ändernde Kippmomente.

Diese Aufgabe wird durch ein Koordinatenmessgerät mit den Merkmalen des Anspruchs 1 gelöst.

Der Kerngedanke der Erfindung besteht darin, dass in an sich bekannter Weise der Drehtisch mit einer oder mehreren, vorzugsweise mit drei Befestigungseinrichtungen an einer Befestigungsseite der Adapterplatte befestigt ist, die dem Messtisch des Koordinatenmessgerätes abgewandt ist. Die Adapterplatte ist ein im Wesentlichen flaches sich in einer Ebene erstreckendes Bauteil, wobei diese Ebene die Hauptebene der Adapterplatte bildet. Sie kann beispielweise rechteckig ausgebildet sein. Auch können Eckbereiche der Adapterplatte abgerundet sein. Dabei weist sie in der Hauptebene eine Ausdehnung auf, die sich bei einer rechteckigen Ausbildung in zwei aufeinander senkrecht stehenden Richtungen unterscheiden kann. Dabei liegt der Drehtisch mit mindestens einer Auflagefläche auf der Adapterplatte auf. Es kann aber auch mit zwei, drei oder mehr Auflageflächen auf der Adapterplatte aufliegen. Um beispielsweise die Lage des Drehtisches eindeutig festzulegen, bieten sich drei relativ kleine Auflageflächen an. Hierfür können beispielsweise drei Unterlegscheiben vorgesehen sein, auf denen der Drehtisch aufliegt und mit den Befestigungseinrichtungen an der Adapterplatte befestigt ist. Die Adapterplatte ist mittels Spanneinrichtungen an dem Messtisch des Koordinatenmessgeräts festgespannt. Weiterhin ist die Adapterplatte derart ausgebildet, dass an ihrer dem Messtisch zugewandten Seite, im Folgenden als Gegenseite bezeichnet, die der Befestigungsseite gegenüberliegt, zusätzlich ein oder mehrere Vorsprünge vorgesehen sind. Der oder die Vorsprünge stützen sich mit ihren der Adapterplatte abgewandten Enden gegen den Messtisch ab. Dabei sind der oder die Vorsprünge im Wesentlichen in Bereichen angeordnet, die der besagten Auflagefläche oder den besagten Auflageflächen gegenüberliegen. Das bedeutet, dass sich der oder die Bereiche an der Gegenseite, in denen der oder die Vorsprünge angeordnet sind, und die eine oder mehrere besagten Auflageflächen an der Befestigungsseite sich in der Hauptebene der Adapterplatte gesehen zumindest abschnittsweise überlappen. Vorzugsweise liegt ein Bereich eines Vorsprungs in der Hauptebene gesehen vollständig innerhalb einer Auflagefläche. Insbesondere bei einer kreisförmigen Auflagefläche wie bei einem Drehtisch liegen die Bereiche der Vorsprünge in der Hauptebene gesehen innerhalb dieser Auflagefläche. Das bedeutet nicht, dass ein Bereich eines Vorsprungs mit allen Auflageflächen überlappen muss sondern dass bei mehreren Auflageflächen jede mindestens von einem Bereich eines Vorsprungs überlappt wird.

Durch die Vorsprünge entsteht zwischen der eigentlichen Adapterplatte und dem Messtisch ein Spalt, dessen Größe von der Höhe der Vorsprünge abhängt. Wird nun die Adapterplatte, z.B. über randseitig angeordnete Schrauben zum Messtisch hin gespannt entsteht eine Spannkraft, die über die Adapterplatte auf die Vorsprünge wirkt, und diese gegen den Messtisch drückt. Die Größe der Spannkraft ist dabei unter anderem von der Höhe der Vorsprünge, der Dicke der Adapterplatte, dem Material der Adapterplatte und der Geometrie der Adapterplatte abhängig. Das bedeutet, dass im an dem Messtisch gespannten Zustand die Adapterplatte nur auf dem mindestens einen Vorsprung, der über die Adapterplatte vorsteht, an dem Messtisch anliegt sowie gegebenenfalls an einem Rand oder Umfang, an dem die Adapterplatte ihrerseits zum Messtisch hin gespannt ist, sofern die Spannkraft entsprechend hoch gewählt wird. Dabei ist die Adapterplatte derart dimensioniert, dass die Kippmomente, die beispielsweise über einen asymmetrisch beladenen Drehtisch eingeleitet werden kleiner sind als die Spannkraft, um zu gewährleisten, dass der oder die Vorsprünge stets auf dem Messtisch aufliegen. Aufgrund der durch die Spanneinrichtungen erzeugten Spannkraft, mit der die Adapterplatte relativ zum Messtisch gespannt ist, ergibt sich auch eine relativ große Auflagekraft auf den Vorsprung oder die Vorsprünge. Die Größe der Auflagekraft kann dabei durch die Höhe des Vorsprungs in Abhängigkeit von der Größe bzw. dem Durchmesser der Adapterplatte gewählt werden. Wenn nämlich die Spanneinrichtungen so gespannt werden, dass der Rand der Adapterplatte an dem Messtisch aufliegt, so ist die auf den oder die Vorsprünge wirkende Auflagekraft eindeutig durch diejenige Kraft bestimmt, die durch die federnde Wirkung des elastisch verformten Randes der Adapterplatte erzeugt wird. Dabei wird über die als Feder wirkende Adapterplatte auf die Vorsprünge eine Kraft senkrecht zum Messtisch zu diesem hin ausgeübt. Gleichzeitig wirkt am Rand oder am Umfang an den Orten, an denen die Spanneinrichtungen angreifen, eine Kraft senkrecht zum Messtisch von diesem weg. Dabei ist die Spannkraft so groß gewählt, dass die durch die auftretenden Dreh- oder Kippmomente entstehenden Kräfte auf die Adapterplatte geringer sind als die Spannkraft und nicht zu einer Verformung oder sonstigen Bewegung der Adapterplatte führen.

Soll beispielsweise ein Drehtisch mit ca. 50cm Durchmesser über die Adapterplatte am Messtisch des Koordinatenmessgeräts befestigt werden, wird eine Adapterplatte mit etwas größeren Abmessungen als der Durchmesser des Drehtischs gewählt und die Höhe eines Vorsprungs kann beispielsweise 0,3mm betragen. Dabei wird die Größe der Adapterplatte entsprechend den Abmessungen des zu befestigenden Drehtisches sowie nach dem im Messtisch vorhandenen Lochraster gewählt. Außerdem darf die sich durch die Höhe des Vorsprungs ergebende Spannkraft nur so groß sein, dass der elastische Bereich des Materials der Adapterplatte nicht überschritten wird.

Durch den oder die Vorsprünge, die dabei im Querschnitt gesehen bei einer horizontal ausgerichteten Adapterplatte vorzugsweise unterhalb des an der Befestigungsseite aufliegenden Drehtisches beziehungsweise dessen Auflageflächen angeordnet sind, wird die Adapterplatte in diesem Bereich von dem Messtisch beabstandet.

Hinsichtlich der Ausrichtung des Messtisches des Koordinatenmessgerätes ist zu erwähnen, dass diese in der Regel horizontal ausgerichtet sind. Dies muss allerdings nicht zwangsläufig so sein. Beispielsweise gibt es insbesondere bei Werkzeugmaschinen auch vertikal ausgerichtete Aufspannflächen.

Vorzugsweise sind mehrere Spanneinrichtungen zum Spannen der Adapterplatte vorgesehen. Bei einer rechteckigen Adapterplatte können z.B. vier Spanneinrichtungen an jeder Ecke verteilt vorgesehen sein. Sind zwei Ecken zu einem Halbkreis abgerundet können an dem Halbkreis auch drei Spanneinrichtungen vorgesehen sein.

Vorteilhafte Ausgestaltungen der Erfindung sind der Gegenstand von Unteransprüchen.

Weiterhin ist vorgeschlagen, dass die Auflagefläche oder die Auflageflächen, mit der/denen der Drehtisch auf der Befestigungsseite der Adapterplatte aufliegt, im Wesentlichen der Fläche oder den Flächen der Vorsprünge entspricht. Somit sind der oder die Vorsprünge bezogen auf einen horizontalen Messtisch im Wesentlichen in der Vertikalen gesehen unmittelbar unterhalb der Auflagefläche/den Auflageflächen des Drehtisches an der Gegenseite der Adapterplatte angeordnet. Somit wird der Drehtisch durch den oder die Vorsprünge abgestützt ohne Verformung in der Adapterplatte.

Vorzugsweise sind an der Adapterplatte genau drei Vorsprünge ausgebildet. Durch diese drei Vorsprünge wird der Drehtisch definiert auf dem Messtisch befestigt beziehungsweise eine überbestimmte Aufspannung vermieden. Die den Messtisch berührende Fläche der Vorsprünge, sollte dabei idealerweise klein gegenüber den zu erwartenden langwelligen Ebenheitsfehlern des Messtisches ausgeführt sein. Somit steht der montierte Drehtisch spielfrei auf den drei durch die Vorsprünge definierten Punkten und eventuell vorhandene Unebenheiten des Messtisches werden nicht auf den Drehtisch übertragen, da die Fläche der drei Vorsprünge bzw. Auflagepunkte klein ist gegenüber den üblicherweise langwelligen Ebenheitsfehlern eines Messtischs. Es könnte sich allenfalls eine geringfügige Schiefstellung des Drehtisches ergeben, die aber bei einer Messung mit üblichen Koordinatenmessgeräten nicht nachteilig ist. Insbesondere mit den nachfolgend beschriebenen in ihrer Höhe veränderbaren Vorsprüngen ist es möglich, eine Rechtwinkligkeit des Drehtisches relativ zum Messtisch zu erhalten, beispielsweise bei einem Formprüfgerät. Mittels der beispielsweise drei Befestigungseinrichtungen ist der Drehtisch gegen ein Umfallen gesichert und ein Kippmoment beispielsweise bei asymmetrisch beladenem Drehtisch wird von der auf die Vorsprünge wirkenden Spannkraft kompensiert. Dies gilt zumindest solange bis Zug- oder Druckkräfte oder Kippmomente, die auf die Adapterplatte einwirken, nicht die Spannkraft, mit der die Adapterplatte an dem Messtisch fixiert ist, überschreiten. Somit kann ein Drehtisch praktisch in beliebiger Weise auf der Adapterplatte befestigt werden. Weiterhin bietet sich der Vorteil, dass eine solche Adapterplatte auch nicht hochpräzise gefertigt werden muss, da, im ungespannten Zustand, lediglich die Vorsprünge auf dem Messtisch aufliegen. Im gespannten Zustand kann der Messtisch beispielsweise noch durch Randbereiche der Adapterplatte, an denen Spanneinrichtungen angreifen, berührt werden.

Es ist für den Fachmann ersichtlich, dass auch prinzipiell mehr als drei Vorsprünge vorgesehen sein können, beispielsweise vier, fünf oder sechs. Dies kann insbesondere bei großflächigen Adapterplatten bevorzugt sein, um eine vielfache Abstützung des Werkstücks auf dem Messtisch zu erreichen.

Weiterhin ist es ersichtlich, dass die Zahl der Vorsprünge nicht notwendigerweise der Zahl der Befestigungseinrichtungen für eine Komponente an der Befestigungsseite der Adapterplatte entsprechen muss. Beispielsweise kann eine Komponente an sechs Befestigungseinrichtungen an der Befestigungsseite befestigt sein. Trotzdem können nur drei Vorsprünge an der Gegenseite der Adapterplatte vorgesehen sein, um diese in bestimmter Weise zu spannen. Die drei Vorsprünge liegen dabei idealerweise, gleichmäßig verteilt, zentrisch unter drei Befestigungspunkten des Drehtisches.

Prinzipiell muss die Adapterplatte mit beispielsweise drei Spanneinrichtungen nicht derart gespannt werden, dass beispielsweise ihr Rand unmittelbar auf einem Messtisch aufliegt. In dem Fall berühren lediglich vorzugsweise drei Vorsprünge den Messtisch. Hierzu kann bei einer Ausführung der Spanneinrichtungen auf dem Messtisch als Gewindebuchse/Gewindestab oder Schraube beispielsweise mit einem Drehmomentschlüssel die Adapterplatte in gewünschter Weise gespannt werden.

In einer Ausführungsform sind die Vorsprünge einstückig mit der Adapterplatte ausgebildet, sie können aber auch nachträglich daran befestigt werden, beispielsweise durch das Einschrauben eines plättchen- oder zylinderartigen Fußes in eine entsprechende Bohrung an der Gegenseite der Adapterplatte. Prinzipiell ist es auch möglich, an einem gewünschten Ort zwischen Adapterplatte und Messtisch eine Unterlegscheibe oder einen Distanzring anzuordnen, um, je nach zu befestigendem Drehtisch, den Ort eines oder mehrere Vorsprünge an der Gegenseite der Adapterplatte in gewünschter Weise zu wählen.

In bevorzugter Weise sind der oder die Vorsprünge in einer Ausnehmung an einer Gegenseite der Adapterplatte angeordnet. Hierzu kann eine beispielsweise kreisrunde Ausnehmung an der Gegenseite ausgefräst oder in sonstiger Weise ausgestochen werden. Um die Vorsprünge innerhalb dieser Ausnehmung befestigen zu können, können in der Mitte der Ausnehmung oder vorzugsweise symmetrisch verteilt zusätzlich Gewindebohrungen vorgesehen sein. In diese Gewindebohrungen wird dann jeweils ein Vorsprung, beispielsweise ein zylindrischer Fuß, eingeschraubt, so dass dieser beispielsweise 0,3mm über die Gegenseite der Adapterplatte übersteht.

Insbesondere bei einer lösbaren Ausgestaltung des Vorsprungs ist vorgeschlagen, dass dessen Höhe bzw. Überstand über die Gegenseite der Adapterplatte, das ist die dem Messtisch zugewandte Seite der Adapterplatte, veränderbar ist. Dies kann beispielsweise durch ein Schraubgewinde erfolgen, wobei hierzu eine Gewindebohrung die Adapterplatte durchgreift und von oben her beispielsweise mit einem Inbusschlüssel der Vorsprung aus- und eingeschraubt werden kann. Auch eine Art Bajonettverschluss, der eine Drehbewegung in ein Anheben und Absenken umwandelt, ist denkbar. Ein eventuell vorhandenes Spiel einer solchen Höhenverstellung ist dabei unerheblich, da durch das eigentliche Spannen der Adapterplatte auf dem Messtisch eine Spannkraft erzeugt wird, die ein möglicherweise vorhandenes Spiel kompensiert. Sind die Vorsprünge in ihrer Höhe veränderbar, so können diese beispielsweise in eine vorstehend beschriebene Ausnehmung eingezogen werden, so dass eine Adapterplatte auch auf einem Luftkissen praktisch kraftlos verschoben werden kann. Entsprechende Luftkanäle können im Messtisch und/oder der Adapterplatte ausgebildet sein, die jeweils mit Druckluft beaufschlagbar sind. Auch können somit Beschädigungen des Messtisches durch überstehende Vorsprünge vermieden werden. Ist die Höhe der Vorsprünge entsprechend klein gewählt, können diese auch einstückig mit der Adapterplatte ausgebildet sein, sofern durch ein Luftkissen die Adapterplatte hoch genug anhebbar ist. Insbesondere können diese Luftkanäle auch in den Vorsprüngen selbst ausgebildet sein.

Vorzugsweise ist ein Vorsprung zylinderförmig ausgebildet, wobei der Vorsprung entweder ein Hohlzylinder oder ein Vollzylinder sein kann, der auf der Oberfläche des Messtischs aufliegt.

In einer Ausgestaltung ist nur ein einziger zylinderförmiger Vorsprung vorgesehen. In diesem Fall reicht nur eine einzige Befestigungseinrichtung für den Drehtisch an der Befestigungsseite der Adapterplatte. Es können natürlich auch mehrere Befestigungseinrichtungen vorgesehen sein. Diese eine Befestigungseinrichtung kann beispielsweise als Schraube ausgebildet sein, die den Drehtisch befestigt und eine Öffnung im Drehtisch durchgreift. Die Schraube durchgreift dabei auch die Adapterplatte und den zylinderförmigen Vorsprung und wird ihrerseits am Messtisch befestigt, beispielsweise in eine Gewindebuchse eines vorhandenen Lochrasters eingeschraubt.

Eine weitere Ausgestaltung sieht vor, dass die Befestigungseinrichtung für den Drehtisch eine Schraube umfasst, die die Adapterplatte durchgreift und in einem Gewinde im Vorsprung befestigt wird. Dabei wird der Drehtisch beispielsweise dadurch auf der Befestigungsseite der Adapterplatte befestigt, dass die Schraube den Drehtisch an einer entsprechend ausgebildeten Durchbrechung oder einem Loch durchgreift. Beispielsweise kann am Fuß eines Drehtischs ein radial vorstehender Kragen ausgebildet sein, der drei Löcher aufweist.

Zusätzlich zu den Vorsprüngen sowie gegebenenfalls der Ausnehmung, in der die Vorsprünge angeordnet sind, können an der Gegenseite der Adapterplatte weitere Aussparungen ausgebildet sein, die beispielsweise bogenförmig ausgebildet und bei einer Adapterplatte aus Metall beispielsweise ausgefräst werden können. Mittels dieser zusätzlichen Aussparungen kann einer Adapterplatte bei bekannter Geometrie sowie einer bekannten Lage der Vorsprünge, bzw. insbesondere bei bekannten statischen Kippmomenten durch den zu befestigenden Drehtisch ein definiertes Verhalten bezüglich Verformung und/oder Dehnung bei Beaufschlagung mit einer Spannkraft durch die Spanneinrichtungen verliehen werden. Das bedeutet, dass die Spannkraft derart auf die Adapterplatte einwirkt, dass alle Vorsprünge mit einer gleichmäßigen Kraft beaufschlagt werden. Die Aussparungen lassen sich mit der Finite-Elemente-Methode berechnen. Alternativ oder zusätzlich können derartige Aussparungen auch an der Befestigungsseite der Adapterplatte ausgebildet sein. Dadurch kann insbesondere ein symmetrisches Verhalten in den auf dem Messtisch aufliegenden Flächen der Vorsprünge erreicht werden. In gleicher weise können auch zusätzliche Verstärkungen oder Versteifungen wie Rippen oder Stege an der Befestigungsseite und/oder der Gegenseite ausgebildet sein, um eine gleichmäßige Krafteinwirkung auf die Vorsprünge zu erreichen.

Wie vorstehend ausgeführt verfügen oftmals Messtische von Koordinatenmessgeräten über ein standarisiertes Lochraster mit beispielsweise 200mm Abstand. Dementsprechend verteilt sind an der Adapterplatte Löcher ausgebildet, deren Raster dem Lochraster entspricht. Somit kann die Adapterplatte an einer oder mehreren Gewindebuchsen des Lochrasters festgeschraubt werden. Insbesondere sind diese Löcher in einem Randbereich der Adapterplatte ausgebildet.

Die Spanneinrichtungen können beispielsweise Schrauben umfassen, die wie vorstehend beschrieben, Löcher in der Adapterplatte durchgreifen und in Gewindebuchsen eines Lochrasters eingeschraubt werden. Alternativ oder zusätzlich können die Spanneinrichtungen Spannpratzen umfassen. Diese sind vorzugsweise metallische Winkelstücke, die an einem Ende mit Schrauben in einem Lochraster festgeschraubt werden und mit ihrem anderen freien Ende insbesondere einen Randbereich der Adapterplatte im festgeschraubten Zustand auf den Messtisch pressen, um eine Spannkraft zu erzeugen.

Natürlich können auch andere Spanneinrichtungen vorgesehen sein. Beispielsweise sind magnetische Spanneinrichtungen denkbar, pneumatische Spanneinrichtungen, mechanische Greifer oder Kniehebel, um hier nur einige Möglichkeiten zu nennen.

Beim Koordinatenmessgerät kann es sich beispielsweise um ein Portal-, ein Horizontalarm- oder ein sonstiges Koordinatenmessgerät handeln, das über einen Messtisch verfügt, an dem ein Drehtisch befestigt werden kann. Ein solcher Messtisch ist beispielsweise aus Granit oder aus Metall angefertigt und verfügt über netzartig verteilte Befestigungspunkte wie Gewindebohrungen, auch als Lochraster bezeichnet.

Wie vorstehend beschrieben eignet sich die Adapterplatte insbesondere für ein Koordinatenmessgerät, wobei auf der Befestigungsseite der Adapterplatte ein Drehtisch befestigt ist.Dabei liegt der Drehtisch auf der Befestigungsseite der Adapterplatte auf. Die Adapterplatte wiederum verfügt beispielsweise an den Orten, an denen sich die Auflagefläche oder die Auflageflächen des Drehtisches auf der Befestigungsseite befinden, jeweils über einen über die Gegenseite der Adapterplatte überstehenden Vorsprung, der vorzugsweise in einer Ausnehmung angeordnet ist. Ist der Drehtisch auf seiner drehbaren Platte asymmetrisch beladen, so tritt durch diese Drehbewegung eine sich stets ändernde Belastung auf, die zu einem Kippmoment führt, das in ständig ändernder Weise auf die Adapterplatte einwirkt. Durch Spanneinrichtungen wird die Adapterplatte gegen den Messtisch gespannt. Dadurch, dass die Vorsprünge im wesentlichen in Bereichen angeordnet sind, die der besagten Auflagefläche oder den besagten Auflageflächen gegenüberliegen, mit denen der Drehtisch auf der Befestigungsseite aufliegt, kann bei ausreichender Spannkraft eine Verformung der Adapterplatte durch das sich ändernde Kippmoment verhindert werden, so dass eine Messung durch das Koordinatenmessgerät mit geringeren Messfehlern möglich ist.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert. Es zeigen:
- Figur 1:: ein Koordinatenmessgerät 100 mit einer Adapterplatte 2,
- Figur 2:: eine Werkzeugmaschine 120 mit einer Adapterplatte 2,
- Figur 3:: eine Adapterplatte 2 mit darauf befestigtem Drehtisch 3 in Draufsicht,
- Figur 4:: einen Schnitt durch Figur 3 entlang der Linie A-A, wobei der Drehtisch 3 nicht geschnitten ist und die Adapterplatte 2 auf einen Messtisch 110 gespannt ist,
- Figur 5:: die Adapterplatte 2 mit darauf befestigtem Drehtisch 3 in perspektivischer Ansicht von schräg unten,
- Figur 6: eine Adapterplatte 2 im Querschnitt und
- Figur 7: einen Messtisch 110 mit Adapterplatte 2 und Messtisch 110 im Querschnitt.

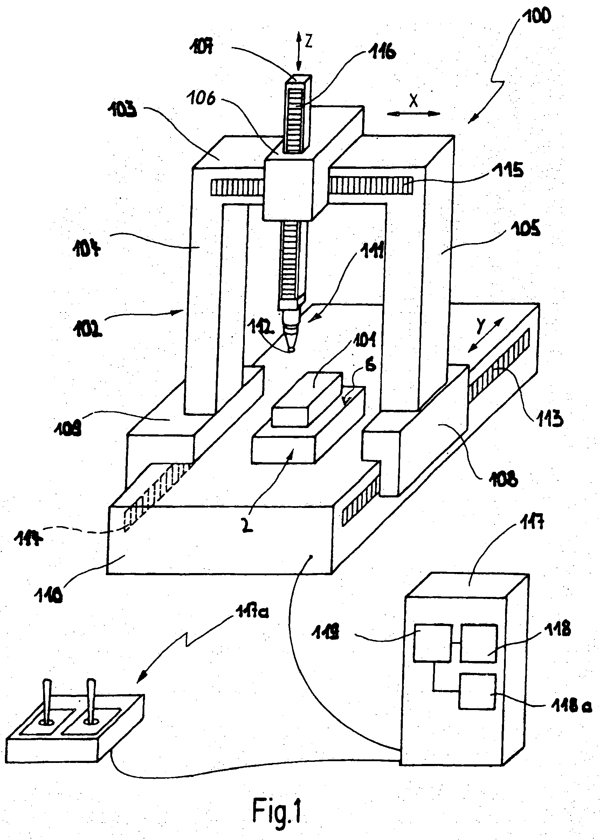

Bei dem in Figur 1 dargestellten Koordinatenmessgerät 100 handelt es sich um ein Koordinatenmessgerät in Portal-Bauweise. Das Koordinatenmessgerät 100 verfügt über einen Messtisch 110, beispielsweise eine massive Granitplatte, die eine Basis für das Koordinatenmessgerät 100 bildet. Auf dem Messtisch 110 ist hier nur schematisch eine Adapterplatte 2 dargestellt, auf der wiederum an ihrer Befestigungsseite 6 ein zu vermessendes Werkstück 101 mit einer oder mehreren Befestigungseinrichtungen befestigt ist. Diese Befestigungseinrichtungen sowie weitere Spanneinrichtungen, um die Adapterplatte 2 in Richtung des Messtischs 110 zu spannen, sind zur Vereinfachung der Darstellung hier nicht abgebildet. Weiterhin verfügt das Koordinatenmessgerät 100 über ein Portal 102, das auf dem Messtisch 110 in Y-Richtung verfahrbar ist. Das Portal 102 umfasst im Wesentlichen eine horizontale Brücke 103, die sich auf zwei vertikale Füße oder Auflager 104, 105 abstützt. An der Brücke 103 wiederum ist ein Schlitten 106 in X-Richtung verschiebbar. Schließlich ist am Schlitten 106 eine Pinole 107 in der dritten Z-Richtung des Raums verschiebbar. Die drei Richtungen X, Y und Z bilden vorzugsweise ein orthogonales Koordinatensystem des Koordinatenmessgeräts 100. Es ist ersichtlich, dass für das Portal 102, den Schlitten 106 und die Pinole 107 Antriebe vorgesehen sind, um ein Verfahren in der jeweiligen Richtung zu ermöglichen. Diese sind hier beispielhaft als Antriebe 108, 109 für das Portal 102 schematisch angedeutet. Zur genauen Positionierung der einzelnen Komponenten sind diesen jeweils Mastäbe 113, 114, 115, 116 zugeordnet beispielsweise aus Glas oder INVAR. Mit den Maßstäben 113, 114, 115, 116 wirken außerdem zur Vereinfachung der Darstellung hier nicht abgebildete Messwertgeber zusammen, die die absolute Position beispielsweise des Portals 102 relativ zu den Maßstäben 113, 114 ermitteln und diese Werte einer Steuerungseinrichtung 117 zuführen, die beispielsweise als Computer ausgebildet ist. Mit der Steuerungseinrichtung 117 werden alle Funktionen des Koordinatenmessgeräts 100 gesteuert und die ermittelten Messwerte des Werkstücks 101 erfasst. Ein Messablauf erfolgt dabei vorzugsweise vollautomatisch gesteuert durch ein entsprechend ausgelegtes Computerprogramm, das in einem Speicher 118 gespeichert ist und einen Prozessor 119 entsprechend ansteuert. Die erfassten Messwerte können in einem weiteren Speicher 118a zur Auswertung gespeichert werden. Schließlich ist noch eine manuelle Steuerung 117a vorgesehen, um beispielsweise einzelne Messpunkte gezielt anzufahren.

Am freien Ende der Pinole 107 ist der Tastkopf 111 angeordnet, hier ein taktiler Tastkopf 111 mit einer Tastkugel 112. Berührt die Tastkugel 111 das Werkstück 101 wird dies registriert, z. B. mit einem schaltenden Tastkopf 111. Aus den Positionen von Portal 102, Schlitten 106 und Pinole 107 relativ zu den jeweiligen Maßstäben 113, 114, 115, 116 kann dann auf die momentane Position der Tastkugel 112 und aufgrund ihrer bekannten Größe auf den tatsächlichen Ort der Oberfläche des Werkstücks 101 geschlossen werden.

Es versteht sich, dass es sich bei dem in Figur 1 gezeigten Koordinatenmessgerät 100 um ein reines Ausführungsbeispiel handelt, das natürlich vielfältig variieren kann. Anstelle des gezeigten Portalmessgerätes könnte beispielsweise auch ein Brückenmessgerät oder ein Horizontalarmmessgerät verwendet werden oder ein Koordinatenmessgerät 100, bei dem der Messtisch 110 des Koordinatenmessgeräts100 selbst bewegbar ausgebildet ist. Anstelle eines schaltenden Tastkopfes 112 können auch andere Tastköpfe verwendet werden, wie beispielsweise optische Tastköpfe oder messende taktile Tastköpfe.

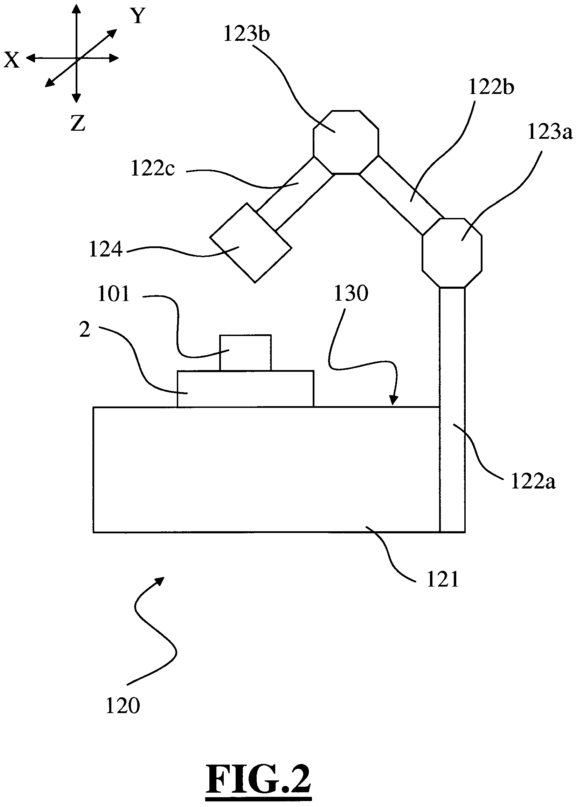

In Figur 2 wird schematisch eine an sich beliebige Werkzeugmaschine 120 wiedergegeben. Sie weist einen Korpus 121 auf, an dessen Oberseite eine Aufspannfläche 130 ausgebildet ist. An der Aufspannfläche 130 kann eine Adapterplatte 2 mit zur Vereinfachung der Darstellung hier nicht abgebildeten Spanneinrichtungen aufgespannt werden. An der Adapterplatte 2 ist mit hier ebenfalls nicht abgebildeten Befestigungseinrichtungen ein Werkstück 101 befestigt. Zur Bearbeitung des Werkstücks 101 ist beispielsweise ein aus mehreren Segmenten 122a, b, c bestehender Werkzeugarm vorgesehen, wobei die Segmente 122a, b, c über Gelenke 123a, b miteinander verbunden sind. Wie durch die drei Pfeile X, Y, Z angedeutet kann der Werkzeugarm sich vorzugsweise in allen drei Raumrichtungen bewegen, um das Werkstück 101 an beliebigen Punkten bearbeiten zu können. Zur eigentlichen Bearbeitung dient beispielsweise ein Fräskopf 124 am freien Ende des Werkzeugarms, der hier nur schematisch angedeutet ist. Es kann aber auch ein Bohrer oder ein sonstiges Werkzeug sein, auch können diese austauschbar sein. Es versteht sich, dass auch die Werkzeugmaschine 120 mit einer computergestützen und/oder einer manuellen Steuerungseinrichtung ausgestattet ist.

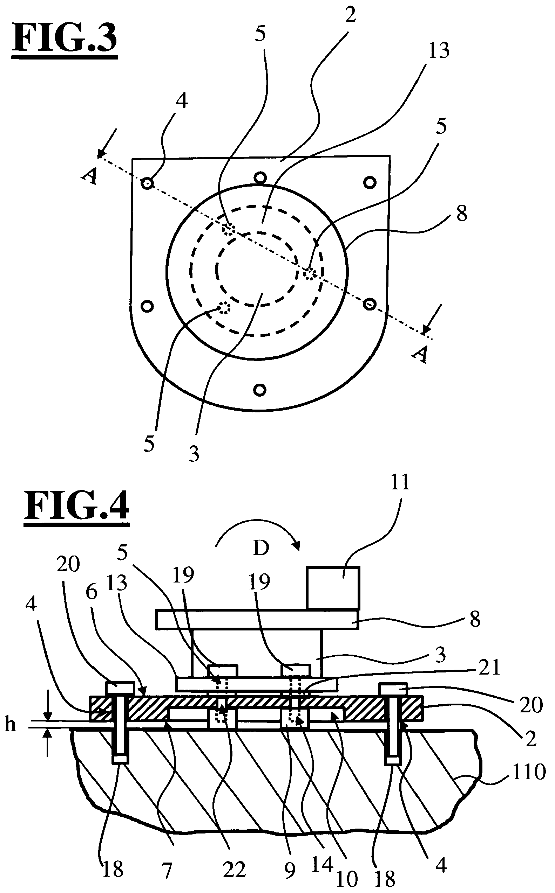

Das in den Figuren 3 bis 5 dargestellte nicht maßstäbliche Ausführungsbeispiel zeigt unter anderem eine erfindungsgemäße Adapterplatte 2, auf der ein Drehtisch 3 befestigt ist. Wie aus Figur 3 zu sehen ist, ist der Drehtisch 3 im Wesentlichen rund und weist eine sich drehende Platte 8 auf, wobei das runde Gehäuse des Drehtischs 3 sowie ein radial überstehender Kragen 13 des Drehtischs 3 mit gestrichelten Kreisen dargestellt sind. Die Adapterplatte 2 ist randseitig mit Löchern 4 versehen, deren Abstand dem Abstand des üblichen Rasters der Gewindebuchsen 18 eines Messtischs 110 eines Koordinatenmessgeräts 100 entspricht, beispielsweise 200mm. In einem Kragen 13 des Drehtischs 3 sind vorzugsweise äquidistant verteilt angeordnet drei durchgehende Löcher 5 ausgebildet, die den Teil einer Befestigungseinrichtung zur Befestigung des Drehtischs 3 auf der Adapterplatte 2 bilden.

Die Befestigung des Drehtisches 3 auf der Adapterplatte 2 und die Befestigung der Adapterplatte 2 auf dem Messtisch 110 des Koordinatenmessgerätes 100 aus Figur 1 kann gut aus Figur 4 ersehen werden. In Figur 4 ist ein etwas vereinfachter Schnitt der Adapterplatte 2 aus Figur 3 entlang der Linie A-A gezeigt, wobei hierin neben der in Figur 3 gezeigten Adapterplatte 2 und dem darauf befestigten Drehtisch 3 zusätzlich auch Spanneinrichtungen in Form von Schrauben 20 zu sehen sind sowie der ausschnittsweise zu sehende Messtisch 110 des Koordinatenmessgerätes 100 aus Figur 1, der hier im Schnitt dargestellt ist. Nicht geschnitten wurden der besseren Übersichtlichkeit halber der Drehtisch 3, die Vorsprünge 9, die Schrauben 19 und die Schrauben 20 sowie die Unterlegscheiben 21. Außerdem wurden einige hinter der Schnittebene liegende Kanten, wie beispielsweise die Kanten des dritten Vorsprungs 9 weggelassen.

Wie man aus Figur 4 sehen kann, ist auf einer Befestigungsseite 6 der Adapterplatte 2 der Drehtisch 3 mit drei Befestigungseinrichtungen in Form von drei Schrauben 19 befestigt, wobei aufgrund der Schnittdarstellung hier nur zwei Schrauben 19 abgebildet sind. Zur Befestigung eines an sich beliebigen Objekts, wie eines zu vermessenden Werkstücks 101, siehe Figur 1, können an der Befestigungsseite 6 der Adapterplatte 2 auch noch weitere Befestigungseinrichtungen vorgesehen sein. Jede dieser drei Schrauben 19, von denen hier in Figur 4 nur zwei zu sehen sind, durchgreifen jeweils ein Loch 5 im überstehenden Kragen 13 des Drehtisches 3 und eine zwischen der Adapterplatte 2 und dem Kragen 13 des Drehtisches angeordnete Unterlegscheibe 21, sowie ein entsprechend vorgesehenes Loch 22 in der Adapterplatte 2 und greifen dann in ein Gewinde eines Sacklochs 14 in einem Vorsprung 9 ein, wie dies aus Figur 4 durch die Strichelung im Vorsprung 9 zu sehen ist. Somit bilden die Schraube 19, das Loch 5, die Unterlegscheibe 21, das Loch 22 und das Sackloch 14 eine Befestigungseinrichtung für den Drehtisch 3.

Die Unterlegscheiben 21 befinden sich deshalb zwischen dem Kragen 13 des Drehtisches 3 und der Adapterplatte 2, damit der Drehtisch 3 mit genau drei sehr kleinen Auflageflächen auf der Adapterplatte 2 aufliegt, wobei jede der Auflageflächen der aufliegenden Fläche einer dieser Unterlegscheiben 21 entspricht. Hierdurch entsteht näherungsweise eine Dreipunktlagerung des Drehtisches 3 auf der Adapterplatte 2, wodurch die Lage des Drehtisches 3 auf der Adapterplatte 2 eindeutig bestimmt ist.

Die Adapterplatte 2 wiederum ist über Spanneinrichtungen in Form von Schrauben 20 an dem Messtisch 110 des Koordinatenmessgerätes aus Figur 1 festgespannt, indem durch jedes der in Figur 3 gezeigten Löcher 4 eine Schraube 20 hindurchgreift und in ein Gewinde einer Gewindebuchse 18 im Messtisch 110 eingreift, wie dies Figur 4 zeigt. Die auf der der Befestigungsseite 6 gegenüberliegenden Gegenseite 7 angeordneten Vorsprünge 9 stützen sich dabei mit ihrem der Adapterplatte 2 abgewandten Ende gegen den Messtisch 110 ab.

Wie man aus Figur 4 ersehen kann, sind die Vorsprünge 9 genau in denjenigen Bereichen angeordnet, die den besagten Auflageflächen, also den Unterlegscheiben 21, gegenüberliegen. Die Spanneinrichtungen, hier also die Schrauben 20, spannen die Adapterplatte 2 in Richtung des Messtisches 110.

Die Vorsprünge 9 sind hier in einer gemeinsamen Ausnehmung 10 angeordnet. Die Ausnehmung 10 kann beispielsweise aus der Gegenseite 7 der Adapterplatte 2 ausgefräst oder ausgestochen werden oder bei einer gegossenen Adapterplatte 2 bereits in einer Gussform vorgesehen werden. Die Vorsprünge 9 sind entweder einstückig mit der Adapterplatte 2 ausgebildet oder davon lösbar. Hierzu können die Vorsprünge 9 beispielsweise in eine entsprechend ausgebildete Gewindebohrung in der Adapterplatte 2 ein- und ausgeschraubt werden, um den Überstand h der Vorsprünge 9 über die Gegenseite 7 der Adapterplatte 2 in gewünschter Weise zu verändern. Prinzipiell können die Vorsprünge 9 auch so weit eingezogen werden, dass sie nicht mehr über die Gegenseite 7 der Adapterplatte 2 überstehen, um diese beispielsweise auf einem Luftkissen bewegen zu können. Somit wird auch eine Beschädigung des Messtischs 110 des Koordinatenmessgeräts 100 vermieden. Die Vorsprünge 9 können auch in einer weiteren Vertiefung in der Adapterplatte 2 passgenau eingesetzt und beispielsweise mit einem Klebstoff eingeklebt sein. Somit können Scherkräfte auf die Vorsprünge 9 beim Verschieben der Adapterplatte 2 beispielsweise auf einem Messtisch 110 aufgenommen werden.

Auf der drehbaren Platte 8 des Drehtischs 3 ist hier ein weiteres zu vermessendes Werkstück 11 asymmetrisch angeordnet, so dass wie durch den Pfeil D angedeutet ein Kippmoment über den Drehtisch 3 auf die Adapterplatte 2 ausgeübt wird. In der hier dargestellten Position wird die Adapterplatte 2 mit einem Kippmoment D beaufschlagt. Dies würde bei herkömmlichen Adapterplatten 2 aufgrund der Drehbewegung der Platte 8 des Drehtischs 3 zu einer sich ständig ändernden Verformung der Adapterplatte 2 führen, die ihrerseits über die Löcher 4 am Messtisch 110 des Koordinatenmessgeräts 100 gespannt ist. Somit können Messungenauigkeiten auftreten.

Dadurch, dass die Vorsprünge 9 im Wesentlichen in Bereichen angeordnet sind, die der besagten Auflagefläche oder den besagten Auflageflächen gegenüberliegen, mit denen der Drehtisch 3 oder das Objekt auf der Befestigungsseite 6 aufliegt, kann bei ausreichender Spannkraft eine Verformung der Adapterplatte 2 durch das sich ändernde Kippmoment D verhindert werden,

Somit sind mit dieser Adapterplatte 2 die Messergebnisse des Koordinatenmessgeräts 100 erheblich verbessert.

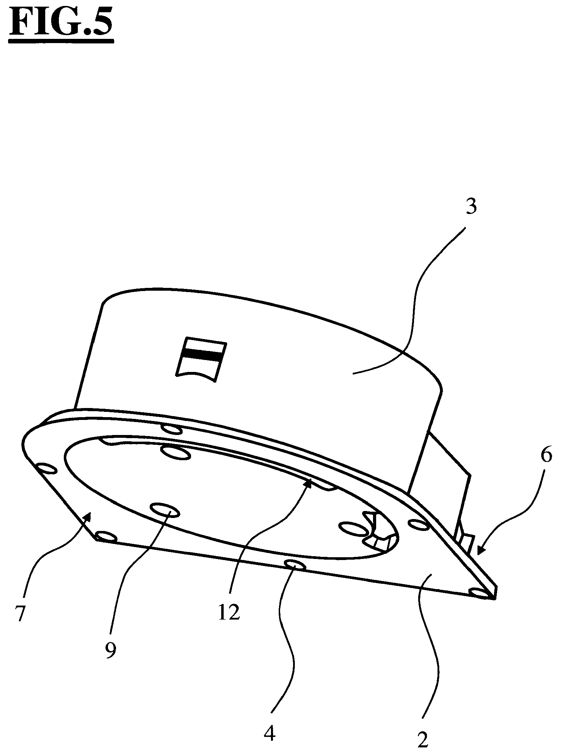

Schließlich ist in Figur 5 eine perspektivische Ansicht der Adapterplatte 2 mit dem auf der Befestigungsseite 6 befestigten Drehtisch 3 von schräg unten abgebildet. Eine Befestigung des Drehtischs 3 auf der Befestigungsseite 6 der Adapterplatte 2 kann wie vorstehend beschrieben erfolgen. Hier weist die Adapterplatte 2 eine Formgebung eines Rechtecks auf, bei dem zwei Ecken abgerundet sind, so dass an einer kürzeren Seite des Rechtecks ein Halbkreis ausgebildet ist. Die Löcher 4 in der Adapterplatte 2 als Bestandteil von Spanneinrichtungen sind entsprechend einem Lochraster eines Messtischs 110 eines Koordinatenmessgeräts 100 randseitig verteilt mit einem Abstand von 200mm angeordnet. Genau drei Vorsprünge 9 sind vorgesehen, die sich im auf dem Messtisch 110 aufgespannten Zustand der Adapterplatte 2 mit ihren jeweiligen freien Enden gegen den Messtisch 110 abstützen. Somit wird der Drehtisch 3 von den drei Vorsprüngen 9 im Wesentlichen symmetrisch abgestützt. Weiterhin ist ersichtlich, dass an der Gegenseite 7 der Adapterplatte 2 zusätzlich eine Aussparung 12 ausgebildet ist. Diese kann ebenfalls ausgefräst, ausgestochen oder beim Gießen bereits bei der Herstellung vorgesehen werden. Durch diese zusätzliche hier bogenförmige Aussparung 12, es können auch mehrere Aussparungen 12 vorgesehen sein, wird eine symmetrische Nachgiebigkeit der Adapterplatte 2 erreicht. Somit werden besonders bei der hier asymmetrisch ausgebildeten Adapterplatte 2 die Vorsprünge 9 gleichmäßig mit der Spannkraft beaufschlagt.

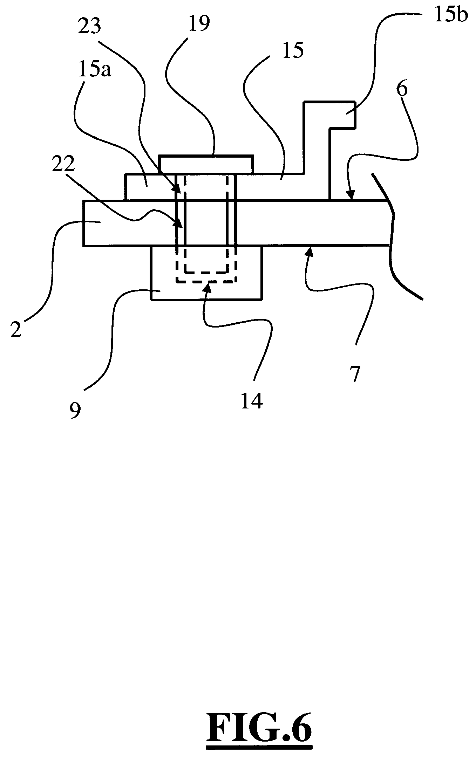

Die Figur 6 zeigt einen Ausschnitt der Adapterplatte 2 im Querschnitt, wobei hier in der Querschnittsdarstellung nichts geschnitten ist und durch die geschwungene vertikale Linie angedeutet ist, dass sich die Adapterplatte 2 noch nach rechts fortsetzt. An der Gegenseite 7 ist ein Vorsprung 9 angeordnet. Die Adapterplatte 2 weist ein Loch 22 auf, das von einer Schraube 19 durchgriffen wird. Dabei ist hier die Darstellung so gewählt, dass das Loch 22 in der Adapterplatte 2 mit durchgehenden Linien verdeutlicht ist. Im Vorsprung 9 wiederum ist ein Sackloch 14 ausgebildet, vorzugsweise als Gewindebohrung. Hier ist die Darstellung derart gewählt, dass das Sackloch 14 und derjenige Teil der Schraube 19, der in das Sackloch 14 eingeschraubt ist, gestrichelt sind. Weiterhin dient die Schraube 19 dazu, eine Spannpratze 15 zu fixieren. Die Spannpratze 15 wird im Wesentlichen durch einen Metallwinkel gebildet. Das eine Ende 15a weist ein Loch 23 auf, das von der Schraube 19 durchgriffen wird. Ist die Schraube 19 in das Sackloch 14 eingeschraubt ist das Ende 15a der Spannpratze 15 relativ zur Adapterplatte 2 an dieser fixiert. Dadurch kann auch ein lösbarer Vorsprung 9 an der Adapterplatte 2 fixiert werden. Somit bilden die Schraube 19 sowie die Spannpratze 15 den Teil einer Befestigungseinrichtung für einen Drehtisch 3, der hier nicht abgebildet ist. Dieser wird von dem anderen freien Ende 15b der Spannpratze 15 beispielsweise an seinem Kragen 13 an der Adapterplatte 2 fixiert. Sind beispielsweise drei derartige Spannpratzen 15 am Kragen 13 eines Drehtischs 3 äquidistant verteilt angeordnet, so ist dieser in festgelegter Weise an der Adapterplatte 2 befestigt. Es versteht sich, dass die Spannpratze 15 auch Bestandteil einer Spanneinrichtung zum Spannen einer Adapterplatte 2 auf einem Messtisch 110 oder einer Aufspannfläche 130 sein kann.

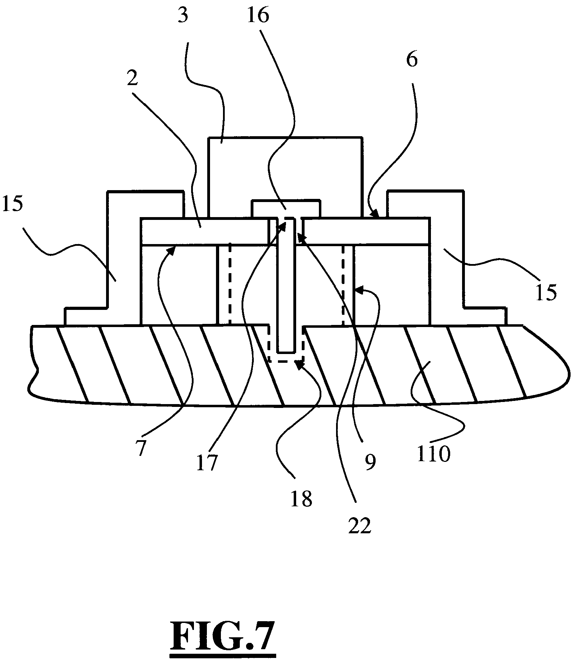

In Figur 7 ist nicht massstäblich ein Messtisch 110 eines Koordinatenmessgeräts 100 beispielsweise aus Figur 1 teilweise abgebildet. Auf diesem Messtisch 110 ist eine Adapterplatte 2 mit Spannpratzen 15 zu diesem hin gespannt. An der Adapterplatte 2 ist ein Drehtisch 3 befestigt. Der Messtisch 110 verfügt über ein Lochraster mit Gewindebuchsen 18 mit einem Lochabstand von beispielsweise 200mm, von denen hier eine abgebildet ist. Ein Vorsprung 9 an einer Gegenseite 7 einer Adapterplatte 2 ist als hohler Zylinder ausgebildet, wie durch die durchgezogenen und gestrichelten Linien verdeutlicht. Der Drehtisch 3, der Vorsprung 9, die Spannpratzen 15, die Schraube 16 und die Adapterplatte 2 sind hier nicht geschnitten sondern nur schematisch dargestellt. Der Drehtisch 3 wird mit einer einzigen zentralen Schraube 16 an der Befestigungsseite 6 der Adapterplatte 2 befestigt. Dabei durchgreift die Schraube 16 eine durch die Strichelung angedeutete Öffnung 17 im Drehtisch 3 sowie ein Loch 22 in der Adapterplatte 2 und ist in die Gewindebuchse 18 eingeschraubt. Mit Spanneinrichtungen in Form von Spannpratzen 15, die gleichartig wie die Spannpratzen 15 aus Figur 6 ausgebildet sind, wird die Adapterplatte 2 in Richtung auf den Messtisch 110 gespannt. Die Befestigung der Spannpratzen 15 am Messtisch 110 kann in an sich beliebiger Weise erfolgen, beispielsweise können sie angeschraubt werden, und ist hier nicht näher dargestellt.

### Bezugszeichenliste:

- 2: Adapterplatte
- 3: Drehtisch
- 4: Loch
- 5: Loch6 Befestigungsseite
- 7: Gegenseite
- 8: drehbare Platte
- 9: Vorsprung
- 10: Ausnehmung
- 11: Werkstück
- 12: Aussparung
- 13: Kragen an 3
- 14: Sackloch in 9
- 15: Spannpratze
- 15a, b: Enden von 15
- 16: Schraube
- 17: Öffnung
- 18: Gewindebuchse in 110
- 19: Schraube
- 20: Schraube
- 21: Unterlegscheibe
- 22: Loch
- 23: Loch
- 100: Koordinatenmessgerät
- 101: Werkstück
- 102: Portal
- 103: horizontale Brücke
- 104: Auflager
- 105: Auflager
- 106: Schlitten
- 107: Pinole
- 108: Antrieb
- 109: Antrieb
- 110: Messtisch
- 111: Tastkopf
- 112: Tastkugel
- 113: Massstab
- 114: Massstab
- 115: Massstab
- 116: Massstab
- 117: Steuerungseinrichtung
- 117a: manuelle Steuerung
- 118: Speicher
- 119: Prozessor
- 120: Werkzeugmaschine
- 121: Korpus
- 122a, b, c: Segmente eines Werkzeugarms
- 123a, b: Gelenke eines Werkzeugarms
- 124: Fräskopf
- 130: Aufspannfläche

- h: Überstand
- D: Drehmoment

## Patentansprüche

1. Koordinatenmessgerät mit einem Messtisch (110), einem Drehtisch und einer Adapterplatte (2) zur Montage des Drehtisches auf dem Messtisch (110), wobei der Drehtisch an einer Befestigungsseite (6) der Adapterplatte (2) mit einer oder mehreren Auflageflächen aufliegt und mit einer oder mehreren Befestigungseinrichtungen befestigt ist, und wobei die Adapterplatte (2) über eine oder mehrere Spanneinrichtungen an dem Messtisch (110) festgespannt ist, wobei an der der Befestigungsseite (6) gegenüberliegenden Gegenseite (7) der Adapterplatte (2) ein oder mehrere Vorsprünge (9) vorgesehen sind, wobei der oder die Vorsprünge (9) sich mit seinem/ihrem der Adapterplatte (2) abgewandten Ende gegen den Messtisch (110) abstützen, wobei der oder die Vorsprünge (9) im Wesentlichen in Bereichen angeordnet sind, die der besagten Auflagefläche oder den besagten Auflageflächen gegenüberliegen und die besagte Spanneinrichtung oder die besagten Spanneinrichtungen die Adapterplatte (2) in Richtung des Messtisches (110) spannen.

2. Koordinatenmessgerät nach Anspruch 1, **dadurch gekennzeichnet, dass** die Auflagefläche oder die Auflageflächen, mit der/denen der Drehtisch auf der Befestigungsseite (6) der Adapterplatte (2) aufliegt, im Wesentlichen der Fläche oder den Flächen der Vorsprünge entspricht.

3. Koordinatenmessgerät nach einem der Ansprüche 1 oder 2, **dadurch gekennzeichnet, dass** genau drei Vorsprünge (9) vorgesehen sind.

4. Koordinatenmessgerät nach einem der Ansprüche 1 bis 3, **dadurch gekennzeichnet, dass** der oder die Vorsprünge (9) einstückig mit der Adapterplatte (2) ausgebildet ist/sind oder davon lösbar ist/sind.

5. Koordinatenmessgerät nach einem der Ansprüche 1 bis 4, **dadurch gekennzeichnet, dass** der oder die Vorsprünge (9) in einer Ausnehmung (10) der Adapterplatte (2) angeordnet ist/sind.

6. Koordinatenmessgerät nach einem der Ansprüche 1 bis 5, **dadurch gekennzeichnet, dass** eine Höhe des oder der Vorsprünge (9) veränderbar ist/sind.

7. Koordinatenmessgerät nach einem der Ansprüche 1 bis 6, **dadurch gekennzeichnet, dass** der oder die Vorsprünge (9) zylinderförmig, insbesondere als Hohlzylinder, ausgebildet ist/sind.

8. Koordinatenmessgerät nach einem der Ansprüche 1, 2 oder 4 bis 7, **dadurch gekennzeichnet, dass** bei nur einem einzigen zylinderförmigen Vorsprung (9) an der Adapterplatte (2) eine einzige Befestigungseinrichtung in Form einer die Adapterplatte (2) und den zylinderförmigen Vorsprung (9) durchgreifende Schraube (16) ausgebildet ist, die ihrerseits am Messtisch (110) befestigt ist.

9. Koordinatenmessgerät nach einem der Ansprüche 1 bis 7, **dadurch gekennzeichnet, dass** die Befestigungseinrichtung eine Schraube (5b) umfasst, die die Adapterplatte (2) durchgreift und in einem Gewinde im Vorsprung (9) befestigt ist.

10. Koordinatenmessgerät nach einem der Ansprüche 1 bis 9, **dadurch gekennzeichnet, dass** an der Gegenseite (7) und/oder der Befestigungsseite (6) der Adapterplatte (2) jeweils eine oder mehrere weitere Aussparungen (12) ausgebildet ist/sind, um eine symmetrische Beaufschlagung der Vorsprünge (9) mit der durch die Spanneinrichtungen erzeugten Spannkraft zu erhalten.

11. Koordinatenmessgerät nach einem der Ansprüche 1 bis 10, **dadurch gekennzeichnet, dass** an der Adapterplatte (2) Löcher (4) ausgebildet sind, die entsprechend einem Lochraster eines Messtischs (110) verteilt angeordnet sind, insbesondere randseitig verteilt.

12. Koordinatenmessgerät nach einem der Ansprüche 1 bis 11, **dadurch gekennzeichnet, dass** die Spanneinrichtungen Schrauben und/oder Spannpratzen (15) umfassen.

## Claims

1. Coordinate-measuring machine having a measuring table (110), a rotary table and an adapter plate (2), for installing the rotary table on the measuring table (110), wherein the rotary table rests on a fastening side (6) of the adapter plate (2) by way of one or more bearing surfaces and is fastened by one or more fastening devices, and wherein the adapter plate (2) is clamped firmly on the measuring table (110) via one or more clamping devices, wherein one or more protrusions (9) are provided on the opposite side (7), located opposite the fastening side (6), of the adapter plate (2), wherein the protrusion or protrusions (9) is or are supported against the measuring table (110) by way of its/their end directed away from the adapter plate (2), wherein the protrusion or protrusions (9) is or are arranged essentially in regions which are located opposite said bearing surface or said bearing surfaces, and said clamping device or said clamping devices clamps or clamp the adapter plate (2) in the direction of the measuring table (110).

2. Coordinate-measuring machine according to Claim 1, **characterized in that** the bearing surface or the bearing surfaces, by way of which the rotary table rests on the fastening side (6) of the adapter plate (2), corresponds or correspond essentially to the surface area or the surface areas of the protrusions.

3. Coordinate-measuring machine according to either of Claims 1 and 2, **characterized in that** precisely three protrusions (9) are provided.

4. Coordinate-measuring machine according to one of Claims 1 to 3, **characterized in that** the protrusion or protrusions (9) is or are formed in one piece with the adapter plate (2) or can be released therefrom.

5. Coordinate-measuring machine according to one of Claims 1 to 4, **characterized in that** the protrusion or protrusions (9) is or are arranged in a recess (10) of the adapter plate (2).

6. Coordinate-measuring machine according to one of Claims 1 to 5, **characterized in that** it is possible to change the height of the protrusion or protrusions (9).

7. Coordinate-measuring machine according to one of Claims 1 to 6, **characterized in that** the protrusion or protrusions (9) is or are designed in the form of a cylinder, in particular of a hollow cylinder.

8. Coordinate-measuring machine according to one of Claims 1, 2 or 4 to 7, **characterized in that**, in the case of there being just one single cylindrical protrusion (9) on the adapter plate (2), there is a single fastening device in the form of a screw (16), which engages through the adapter plate (2) and the cylindrical protrusion (9) and, for its part, is fastened on the measuring table (110).

9. Coordinate-measuring machine according to one of Claims 1 to 7, **characterized in that** the fastening device comprises a screw (5b) which engages through the adapter plate (2) and is fastened in a thread in the protrusion (9).

10. Coordinate-measuring machine according to one of Claims 1 to 9, **characterized in that** in each case one or more further apertures (12) is or are formed on the opposite side (7) and/or the fastening side (6) of the adapter plate (2), in order for the protrusions (9) to be subjected symmetrically to the clamping force generated by the clamping devices.

11. Coordinate-measuring machine according to one of Claims 1 to 10, **characterized by** the formation, on the adapter plate (2), of holes (4), which are distributed, in particular distributed around the periphery, in a manner corresponding to a unit-spacing arrangement of holes of a measuring table (110).

12. Coordinate-measuring machine according to one of Claims 1 to 11, **characterized in that** the clamping devices comprise screws and/or clamping brackets (15).

## Revendications

1. Appareil de mesure de coordonnées avec une table de mesure (110), une table tournante et une plaque adaptatrice (2) pour le montage de la table tournante sur la table de mesure (110), dans lequel la table tournante repose sur un côté de fixation (6) de la plaque adaptatrice (2) avec une ou plusieurs face(s) d'appui et est fixée avec un ou plusieurs dispositif(s) de fixation, et dans lequel la plaque adaptatrice (2) est calée sur la table de mesure (110) au moyen d'un ou de plusieurs dispositif(s) de serrage, dans lequel il est prévu sur le côté opposé (7) de la plaque adaptatrice (2) opposé au côté de fixation (6) une ou plusieurs saillie (s) (9), dans lequel la ou les saillie(s) (9) prend/prennent appui contre la table de mesure (110) avec son/leur extrémité située à l'opposé de la plaque adaptatrice (2), dans lequel la ou les saillie(s) (9) est/sont disposée(s) essentiellement dans des régions, qui sont situées en face de ladite face d'appui ou desdites faces d'appui ou lesdits dispositifs de serrage serrent la plaque adaptatrice (2) en direction de la table de mesure (110).

2. Appareil de mesure de coordonnées selon la revendication 1, **caractérisé en ce que** la face d'appui ou les faces d'appui, avec laquelle/lesquelles la table tournante repose sur le côté de fixation (6) de la plaque adaptatrice (2), correspond(ent) essentiellement à la face ou aux faces des saillies.

3. Appareil de mesure de coordonnées selon l'une des revendications 1 ou 2, **caractérisé en ce qu'**il est prévu exactement trois saillies (9).

4. Appareil de mesure de coordonnées selon l'une quelconque des revendications 1 à 3, **caractérisé en ce que** la ou les saillie(s) (9) est/sont formée(s) d'une seule pièce avec la plaque adaptatrice (2) ou est/sont séparable(s) de celle-ci.

5. Appareil de mesure de coordonnées selon l'une quelconque des revendications 1 à 4, **caractérisé en ce que** la ou les saillie (s) (9) est/sont disposé (s) dans un évidement (10) de la plaque adaptatrice (2).

6. Appareil de mesure de coordonnées selon l'une quelconque des revendications 1 à 5, **caractérisé en ce qu'**une hauteur de la ou des saillie(s) (9) est variable.

7. Appareil de mesure de coordonnées selon l'une quelconque des revendications 1 à 6, **caractérisé en ce que** la ou les saillie (s) (9) est/sont de forme cylindrique, en particulier de forme cylindrique creuse.

8. Appareil de mesure de coordonnées selon l'une quelconque des revendications 1, 2 ou 4 à 7, **caractérisé en ce que**, lorsqu'il n'y a qu'une seule saillie de forme cylindrique (9) sur la plaque adaptatrice (2), un seul dispositif de fixation est réalisé sous la forme d'une vis (16) traversant la plaque adaptatrice (2) et la saillie de forme cylindrique (9), et qui est de son côté fixée à la table de mesure (110).

9. Appareil de mesure de coordonnées selon l'une quelconque des revendications 1 à 7, **caractérisé en ce que** le dispositif de fixation comprend une vis (5b), qui traverse la plaque adaptatrice (2) et qui est fixée dans un filet dans la saillie (9).

10. Appareil de mesure de coordonnées selon l'une quelconque des revendications 1 à 9, **caractérisé en ce qu'**un ou plusieurs autre(s) évidement(s) (12) est/sont formé (s) sur le côté opposé (7) et/ou sur le côté de fixation (6) de la plaque adaptatrice (2), afin d'obtenir une exposition symétrique des saillies (9) à la force de serrage produite par les dispositifs de serrage.

11. Appareil de mesure de coordonnées selon l'une quelconque des revendications 1 à 10, **caractérisé en ce que** des trous (4) sont pratiqués sur la plaque adaptatrice (2), qui sont répartis suivant un motif de trous d'une table de mesure (110), en particulier répartis du côté du bord.

12. Appareil de mesure de coordonnées selon l'une quelconque des revendications 1 à 11, **caractérisé en ce que** les dispositifs de serrage comprennent des vis et/ou des griffes de serrage (15).
